# EUROPÄISCHE PATENTANMELDUNG

(11) **EP 2 253 371 A1**
(43) Veröffentlichungstag der Anmeldung: **24.11.2010**
(21) Anmeldenummer: 09006914.7
(22) Anmeldetag: 22.05.2009
(51) Int. Cl.: B01D 69/08

(54) **Hohlfasermembran und Dialysator**

(71) Anmelder: B. Braun Avitum AG, 34212 Melsungen (DE)
(72) Erfinder: Baier-Goschütz, Angela nat., Dr., 01819 Kurort Berggiesshübel (DE); Zimmer, Carola, Dr., 01326 Dresden (DE)

(57) **Zusammenfassung**

Die Erfindung betrifft eine Hohlfasermembran mit einer radialen Schichtstruktur, die wenigstens eine Schicht A und wenigstens eine Schicht B aufweist, wobei der Innendurchmesser der Hohlfasermembran im Bereich zwischen 180 µm und 210 µm liegt und wobei die Wandstärke der Hohlfasermembran im Bereich zwischen 25 µm und 45 µm liegt und wobei Schicht B als selektive Separationsschicht ausgebildet ist, die eine Schichtdicke b zwischen 0,1 µm und 5 µm aufweist, und wobei Schicht A eine Schichtdicke a zwischen 20 µm und 50 µm aufweist und als poröse Stütz- bzw. Trägerschicht für Schicht B ausgebildet ist, und wobei Schicht B eine Porenstruktur mit Porendurchmessem zwischen 4 nm und 10 nm aufweist.

## Beschreibung

Die Erfindung betrifft eine Hohlfasermembran mit einer radialen Schichtstruktur, einen Dialysator mit einem Bündel solcher Hohlfasermembranen sowie die Verwendung der erfindungsgemäßen Hohlfasermembran bzw. des erfindungsgemäßen dialysators für Trennprozesse im Nano- und Ultrafiltrationsbereich und für die Hämodialyse, Hämodiafiltration und Hämofiltration.

Solche Hohlfasermembranen sind bereits in vielfältiger Weise aufgrund ihrer Verwendung in der Dialyse- und Plasmapheresetechnik bekannt. Die innere Schicht solcher Hohlfasermembranen bildet während der Behandlung eines Patienten die Blutkontaktseite und weist eine Porenstruktur auf, so dass sie als Separationsschicht für die aus dem Blut abzutrennenden Bestandteile dient, während die äußere Schicht eine als Stütz- bzw. Trägerstruktur für die Separationsschicht dient, damit diese nicht in sich zusammenfällt.

In der Dialysetechnik ist es zur Durchführung eines effektiven Dialysebehandlung notwendig, dass die in dem Dialysator eingesetzte Membran in der Lage ist, möglichst viele Giftstoffe aus dem zu reinigenden Blut zu entfernen und gleichzeitig möglichst viele physiologisch wichtige Substanzen in dem zu reinigenden Blut zu belassen. Für Dialyseverfahren sind Hohlfasermembranen mit einer relativ kleinen Porengröße im Gebrauch. Hierbei werden nämlich überwiegend Substanzen von geringer bis mittlerer Größe aus dem Blut entfernt. Dabei werden im allgemeinen Moleküle mit einem Molekulargewicht von kleiner 500 g/mol in die Gruppe der kleinen Moleküle und Moleküle mit einem Molekulargewicht zwischen 500 g/mol und 15000 g/mol in die Gruppe der mittelgroßen Moleküle eingeordnet. In der Praxis hat es sich bewährt, die Qualität einer Hohlfasermembran anhand der Trenneigenschaft bzw. der Entfernungsrate für zwei unlerschiedliche Moleküle zu bestimmen. Zum einen ist dies das β₂-m-Molekül, als eines der größeren Moleküle, die aus dem Blut zu entfernen sind, und zum anderen das Albumin Molekül, welches im Blut verbleiben soll. Die Qualität einer für Dialysezwecke geeigneten Hohlfasermembran wird danach anhand ihrer Fähigkeit bewertet, möglichst viele β₂.m-Moleküle aus dem Blut zu entfernen und gleichzeitig einen möglichst geringen Verlust an Albumin-Molekülen zu zulassen.

Ziel eines jeden Dialyseverfahrens ist es, die Blutreinigung möglichst Nahe an die effektiv Blutreinigung einer gesunden Niere heranzuführen.

Aufgabe der Erfindung ist es daher, eine Hohlfasermembran und einen Dialysator zur Verfügung zu stellen, welche im Wesentlichen die Blutreinigungsfunktion einer gesunden Nicre übernimmt und dabei eine möglichst hohe Entfernungsrate für β₂-m-Moleküle bei gleichzeitig geringer einen möglichst geringen Verlust an Albumin-Molekülen zu zulassen.

Gelöst wird diese Aufgabe durch die Hohlfasermembran mit den Merkmalen des Anspruchs 1 und durch den Dialysator mit den Merkmalen des Anspruchs 11. Vorteilhafte Ausgestaltungen der Erfindung sind in den Unteransprüchen 2 bis 10 und 12 dargestellt.

Durch eine Hohlfasermembran mit den Merkmalen des Anspruchs 1 ist es ermöglicht, die Reinigungsfunktion der Hohlfasermembran dahingehend zu optimieren, dass die Siebkurve, bei welcher der Siebkoeffizient gegen das Molekulargewicht aufgetragen wird, sich im Wesentlichen der Sicbkurve einer gesunden Niere annähert. Insbesondere durch die Ausgestaltung der Porendurchmessern der Poren der Schicht B zwischen 4 nm und 10 nm ermöglichst eine möglichts effektive Blutreinigung, welche der der Niere sehr nahe kommt, wobei ein möglichst großer Anteil der β₂₋m-Moleküle aus dem Blut entfernbar ist bei gleichzeitig geringem Verlust von Albumin-Molekülen. Eine besonders gute Annäherung an die Siebkurve der Niere hat sich gezeigt, wenn die Schicht B eine Porenstruktur mit Porendurchmessern zwischen 5 nm und 9 nm aufweist. Dadurch ist es ermöglicht, dass β₂₋m-Moleküle, die als eines der größten Moleküle aus dem zu reinigenden Blut herausgefiltert werden sollen, nahezu vollständig entfernt werden, während Albumin-Molcküle als einer der kleineren Molekülarten, die im reinigenden Blut verbleiben sollen, die selektive Separationsschicht der Hohlfasermembran nicht passieren.

In einer ersten vorteilhaften Ausgestaltung der Erfindung weist die Hohlfasermembran eine Mikrostrukturierung in Form einer Ondulation mit einer Wellenlänge zwischen 5 mm und 10 mm sowie einer Amplitude zwischen 0,1 mm und 0,5 mm auf. Durch diese Maßnahme ist gewährleistet, dass während der Blutreinigung die einzelnen in einem Dialysator zu einem Hohlfaserbündel zusammengefassten Hohlfasern besonders gut von der Dialysierflüssigkeit umspült werden. Hierdurch ist ein inniger Kontakt der der einzelnen Hohlfaser mit der Dialysierflüssigkeit erreicht, wodurch ein möglichst vollständiger Abtransport der durch die Hohlfascrmembran aus dem Blut entfernten Substanzen sichergestellt ist. Dieser Effekt zeigt sich besonders deutlich, wenn die Hohlfasemembran eine Mikrostrukturierung in Form einer Ondulation mit einer Wellenlänge von etwa 8 mm sowie einer Amplitude von etwa 0,3 mm aufweist.

Vorteilhafterweise hat sich herausgestellt dass die Trennfähigkeit der einzelnen Hohlfasermembranen nochmals verbessert werden kann, wenn der Innendurchmesser der Hohlfasermembran im Bereich zwischen 190 µm und 200 µm, bevorzugt bei 195 µm liegt. Dieser Effekt wird überraschenderweise noch dadurch verstärkt, wenn die Wandstärke der Wohlfasermembran im Bereich zwischen 30 µm und 40 µm bevorzugt bei 35 µm liegt und die Schichtdicke b der Schicht B zwischen 0,3 µm und 3 µm bevorzugt zwischen 0,5 µm und 2 µm liegt.

Dies erfindungsgemäßen Eigenschaften treten besonders dann auf, wenn in Schicht A und in Schicht B weinigsten zwei Polymere enthalten sind. Dabei hat es sich als vorteilhaft erwiesen, wenn die wenigstens zwei Polymere aus folgenden Polymeren ausgewählt sind: Polysulfon (PSU), Polyvinylparrolidon (PVP), Polyethersulfon (PES), Polyetherimid (PEI), Polyamid (PA), Polycarbonat (PC), Polystyrol (PS), Polymethylmethacrylat (PMMA), Polyvenylidenfluorid) (PVDF), Polyacrylnitril (PAN), Polyimid (PI) und/oder Polyurethan (PU). Besonders gute Reinigungseigenschaften, bei denen die Siebkurve der erfindungsgemäßen Hohlfasermembranen der der Niere besonders gut angenähert sind, treten auf, wenn die wenigstens zwei Polymere Polysulfon (PSU) und Polyvinylparrolidon (PVP) sind.

Die Blutbehandlung mit einem Dialysator, der ein Bündel der erfindungsgemäßen Hohlfasermembranen enthält, ist besonders effektiv, da die Reinigung des Blutes von einer Vielzahl einzelner Hohlfasermembranen vorgenommen wird. Dabei hat es sich als besonders vorteilhaft erwiesen, wenn die Packungsdichte der Hohlfasermembranen in dern Dialysator zwischen 40% und 50% bevorzugt zwischen 44% und 46% liegt, da dadurch eine besonders gute, der Reinigungsfunktion einer gesunden Niere besonders gut angenäherten Blutbehandlung bzw. -reinigung erreicht ist, die in einem vertretbaren zeitlichen Rahmen von ca. bis zu 4 Stunden durchführbar ist.

Gegenstand der Erfindung ist weiterhin auch die Verwendung einer erfindungsgemäßen Hohlfasermembran oder eines erfindungsgemäßen Dialysators n für Trennprozesse im Nano- und Ultrafiltrationsbereich und für die Hämodialysc, Hämodiafiltration und Hämofiltration.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen und deren Rückbeziehung.

Es zeigen:
- Figur 1:: Siebkurven einer gesunden Niere, des crfindungsgemäßen Dialysators mit einem Bündel erfindungsgemäßer Hohlfasermembranen und zweier Wettbewerbsprodukte und
- Figur 2:: Aufnahmen eine erfindungsgemäßen Hohlfasermembran in verschiedenen Vergrößerungen

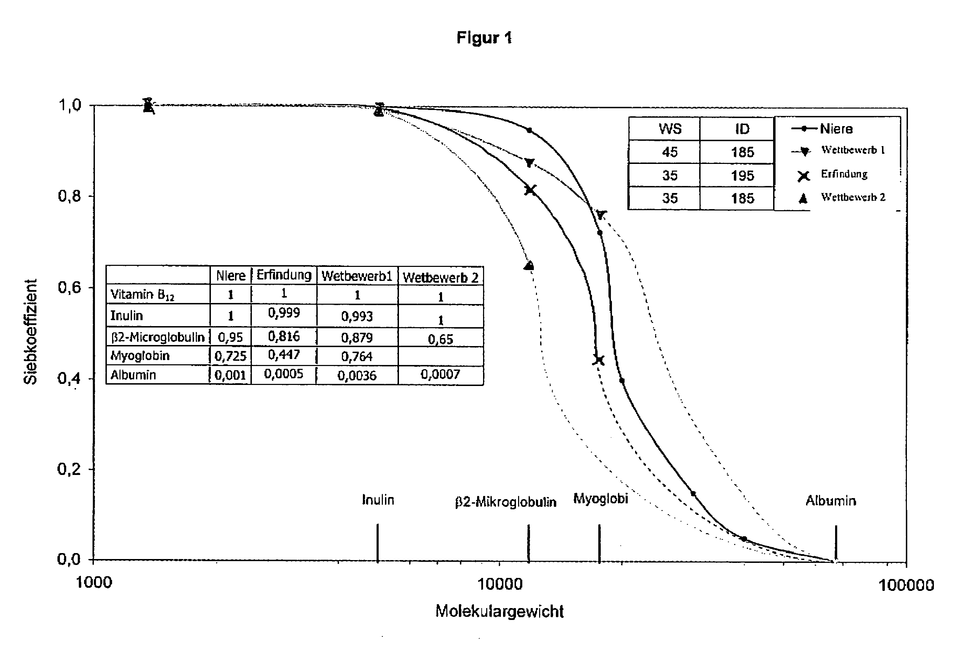

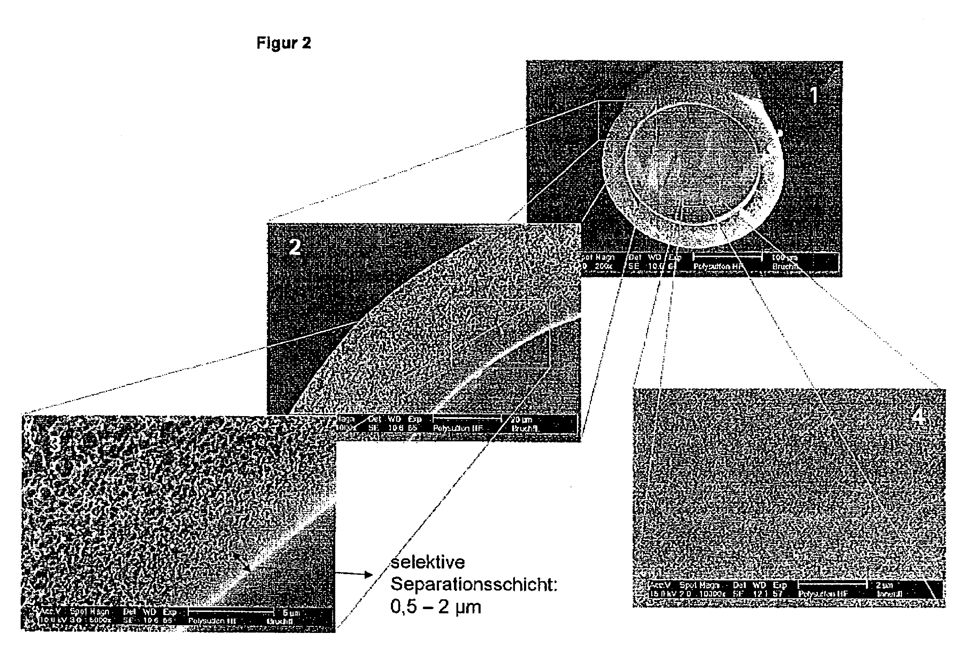

In den Darstellungen der Figur 2 ist eine erfindungsgemäße Hohlfasermembran in verschiedenen Vergrößerungen dargestellt. Dabei ist deutlich die Schicht B als innere selektive Separationsschicht mit einer Schichtdicke in Bereich von 0,5 µm bis 2µm ebenso zu erkennen, wie die für die Schicht B als Stütz- bzw. Trägerschicht fungierende Schicht A. Die Schichtdicke der Schicht A beträgt in etwa 33µm bis 34,5 µm so das sich die Wandstärke der gesamte erfindungsgemäßen Hohlfasermembran zu etwa 35 µm ergibt, wie dies auch der Legende der Figur 1 zu entnehmen ist. Der Innendurchmesser der erfindungsgemäßen Hohlfasermembran beträgt in etwa 195 µm, wie dies ebenfalls auch der Legende der Figur 1 zu entnehmen ist.

In der mit 4 bezeichneten Darstellung der Figur 2 ist die im Wesentlichen homogene Oberfläche der als selektive Separationsschicht dienende Schicht B mit ihrer Porenstruktur dargestellt. Die Porendurchmesser betragen in etwa 5 nm bis 9 nm.

Durch die spezielle Ausbildung der Porenstruktur der Schicht B ist es der Hohlfasermembran ermöglicht in ihren Separationseigenschaften für die physiologischen Bestandteile des Blutes sehr nahe an die einer gesunden Niere heranzureichen, so dass die Siebkurve des erfindungsgemäßen Dialysators mit erfindungsgemäßen Hohlfasermembranen deutlich besser an die Siebkurve einer gesunden Niere angepasst ist als die Siebkurve von Wettbewerbsdialysatoren.

Dadurch ist es ermöglicht, dass β₂₋m-Moleküle, die als eines der größten Moleküle aus dem zu reinigenden Blut herausgefiltert werden sollen, nahezu vollständig entfernt werden, während Albumin-Moleküle als einer der kleineren Molekülarten, die im reinigenden Blut verbleiben sollen, die selektive Separationsschicht der Hohlfasermembran nicht passieren.

## Patentansprüche

1. Hohlfasermembran mit einer radialen Schichtstruktur, die wenigstens eine Schicht A und wenigstens eine Schicht B aufweist,
wobei der Innendurchmesser der Hohlfasermembran im Bereich zwischen 180 µm und 210 µm liegt und
wobei die Wandstärke der Wohlfasermembran im Bereich zwischen 25 µm und 45 µm liegt und
wobei Schicht B als selektive Swparationsschicht ausgebildet ist, die eine Schichtdicke b zwischen 0,1 µm und 5 µm aufweist, und
wobei Schicht A eine Schichtdicke a zwischen 20 µm und 50 µm aufweist und als poröse Stütz- bzw. Trägerschicht für Schicht B ausgebildet ist, und
wobei Schicht B eine Porenstruktur mit Porendurchmessern zwischen 4 nm und 10 nm aufweist.

2. Hohlfasermembran nach Anspruch 1, **dadurch gekennzeichnet, dass** die Hohlfasermembran eine Mikrostrukturierung in Form einer Ondulation mit einer Wellenlänge zwischen 5 mm und 10 mm sowie einer Amplitude zwischen 0,1 und 0,5 mm aufweist.

3. Hohlfasermembran nach einem der vorhergehenden Ansprüche, **dadurch gekennzeichnet, dass** der Innendurchmesser der Hohlfasermembran im Bereich zwischen 190 µm und 200 µm, bevorzugt bei 195 µm liegt.

4. Hohlfasermembran nach einem der vorhergehenden Ansprüche, **dadurch gekennzeichnet, dass** die Wandstärke der Wohlfasermembran im Bereich zwischen 30 µm und 40 µm bevorzugt bei 35 µm liegt

5. Hohlfasrmembran nach einem der vorhergehenden Ansprüche, **dadurch gekennzeichnet, dass** die Schichtdicke b zwischen 0,3 µm und 3 µm bevorzugt zwischen 0,5 µm und 2 µm liegt.

6. Hohlfasermembran nach einem der Ansprüche 2 bis 5, **dadurch gekennzeichnet, dass** die Hohlfasermembran eine Mikrostrukturierung in Form einer Ondulation mit einer Wellenlänge von etwa 8 mm sowie einer Amplitude von etwa 0,3 mm aufweist.

7. Hohlfasermembran nach einem der vorhergehenden Ansprüche, **dadurch gekennzeichnet, dass** Schicht B eine Porenstruktur mit Porendurchmessern zwischen 5 nm und 9 nm aufweist.

8. Hohlfasermembran nach einem der vorhergehenden Ansprüche, **dadurch gekennzeichnet, dass** in Schicht A und in Schicht B weinigsten zwei Polymere enthalten sind.

9. Hohlfasermembran nach Anspruch 8 ,**dadurch gekennzeichnet, dass** die wenigstens zwei Polymere aus folgenden Polymeren ausgewählt sind:
Polysulfon (PSU), Polyvinylparrolidon (PVP), Polyethersulfon (PES), Polyetherimid (PEI), Polyamid (PA), Polycarbonat (PC), Polystyrol (PS), Polymethylmethacrylat (PMMA), Polyvenylidenfluorid) (PVDF), Polyacrylnitril (PAN), Polyimid (PI) und/oder Polyurethan (PU).

10. Hohlfasermembran nach Anspruch 9 ,**dadurch gekennzeichnet, dass** die wenigstens zwei Polymere Polysulfon (PSU) und Polyvinylparrolidon (PVP) sind.

11. Dialysator mit einem Bündel aus Hohlfasermembranen nach einem der vorhergehenden Ansprüche.

12. Dialysator nach Anspruch 11, **dadurch gekennzeichnet, dass** die Packungsdichte der Hohlfasermembranen zwischen 40% und 50% bevorzugt zwischen 44% und 46% liegt.

13. Verwendung eine Hohlfasermembran nach einem der Ansprüche 1 bis 10 oder eines Dialysators nach den Ansprüchen 11 und 12 für Trennprozesse im Nano- und Ultrafiltrationsbereich.

14. Verwendung eine Hohlfasermembran nach einem der Ansprüche 1 bis 10 oder eines Dialysators nach den Ansprüchen 11 und 12 für die Hämodialyse, Hämodiafiltration und Hämofiltration.
